# FASCICULE DE BREVET EUROPEEN

(11) **EP 3 504 120 B1**
(45) Date de publication et mention de la délivrance du brevet: **28.10.2020**
(21) Numéro de dépôt: 17768171.5
(22) Date de dépôt: 16.08.2017
(51) Int. Cl.: B64C 11/30, F01D 25/18

(54) **SYSTÈME DE CHANGEMENT DE PAS ÉQUIPÉ DE MOYENS DE LUBRIFICATION D'UN PALIER DE TRANSFERT DE CHARGE**
NEIGUNGSÄNDERUNGSSYSTEM MIT MITTEL ZUM SCHMIEREN EINES LASTTRANSFERLAGERS
PITCH-CHANGING SYSTEM EQUIPPED WITH MEANS FOR LUBRICATING A LOAD-TRANSFER BEARING

(30) Priorité: 26.08.2016 FR 1657974
(43) Date de publication de la demande: 03.07.2019
(73) Titulaire: Safran Aircraft Engines, 75015 Paris (FR)
(72) Inventeur: SERVANT, Régis, Eugène, Henri, 77550 Moissy-Cramayel (FR); LAFITTE, Anthony, 77550 Moissy-Cramayel (FR); SOURYAVONGSA, Eddy, Keomorakott, 77550 Moissy-Cramayel (FR); TAJAN, Sébastien, Emile, Philippe, 77550 Moissy-Cramayel (FR); MARTIN, Arnaud, 77550 Moissy-Cramayel (FR)
(74) Mandataire: Gevers & Orès
(86) Numéro de dépôt international: PCT/FR2017/052237
(87) Numéro de publication internationale: WO 2018/037183

(56) Documents cités:
- WO-A1-2013/050704
- WO-A1-2014/013201
- CH-A- 271 823
- US-A1- 2010 008 779

## Description

### 1. Domaine de l'invention

La présente invention concerne le domaine de la propulsion aéronautique. Elle vise un système de changement de pas de pales d'une hélice entraînée par une turbomachine et en particulier des moyens de lubrification d'un palier de transfert de charge dudit système de changement de pas.

### 2. Etat de la technique

Le changement de pas ou calage variable de pales d'une hélice de turbomachine est l'une des voies pour améliorer les performances et rendements des turbomachines dans différentes conditions de vol.

Il est connu des turbomachines telles que des turbopropulseurs à doublet d'hélices de propulsion, par exemple contrarotatives, désignés en anglais par « open rotor » et « unducted fan » équipés de ces systèmes de changement de pas. Les turbopropulseurs se distinguent des turboréacteurs par l'utilisation d'une hélice à l'extérieur de la nacelle (non carénée) au lieu d'une soufflante. Le système de changement de pas peut également s'appliquer à un turbopropulseur à une hélice de propulsion ou encore s'adapter indifféremment à une ou chaque hélice.

Dans un turbomoteur de type open rotor, une partie générateur de gaz et une partie propulsion sont alignées et disposées dans une nacelle cylindrique fixe portée par la structure de l'aéronef. La partie générateur de gaz peut être disposée à l'avant ou à l'arrière de la partie propulsive. La partie propulsive comporte un doublet d'hélices coaxiales et contrarotatives, respectivement amont et aval, qui sont entraînées en rotation inverse l'une de l'autre par une turbine, en particulier basse pression, de la partie générateur de gaz via un réducteur, par exemple, à trains épicycloïdaux. Les hélices s'étendent sensiblement radialement vis-à-vis de l'arbre de transmission d'axe longitudinal à l'extérieur de la nacelle. De manière générale, chaque hélice comprend un carter rotatif sensiblement cylindrique portant un moyeu à anneau polygonal extérieur reçu de façon rotative autour de l'axe longitudinal dans la nacelle fixe. Le moyeu comporte des logements cylindriques radiaux répartis sur sa périphérie autour de l'axe longitudinal. Des arbres d'axes radiaux, perpendiculaires à l'axe longitudinal de la turbomachine, solidaires des pieds des pales sont reçus dans les logements des anneaux polygonaux et traversent également des passages radiaux du carter cylindrique. Des paliers de guidage en rotation logés dans ces passages radiaux maintiennent les arbres radiaux dans leurs passages.

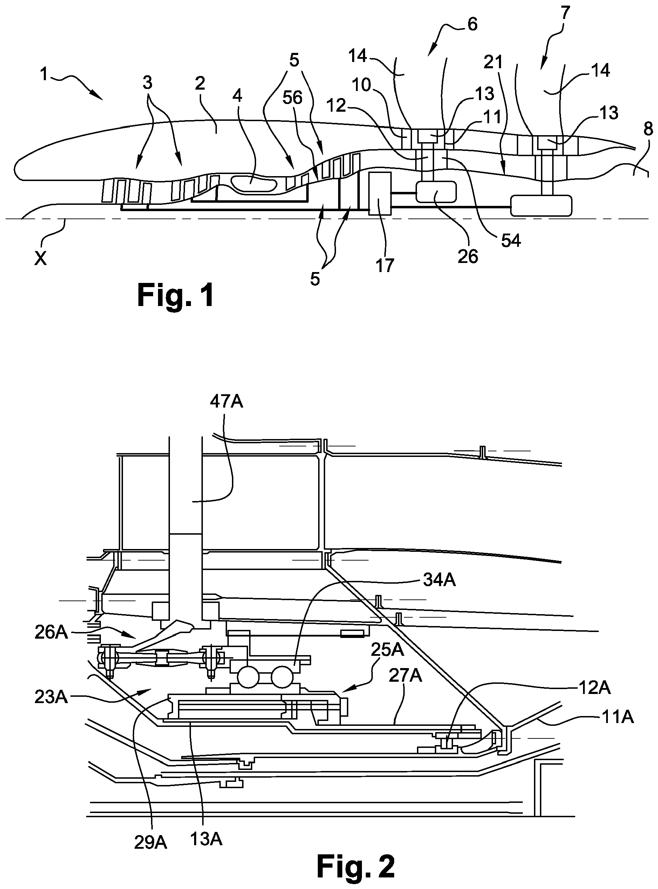

Un exemple de système de changement de pas de chaque hélice est connu du document WO2013/050704. Ce document est considéré comme l'art antérieur le plus proche et décrit les caractéristiques du préambule de la revendication 1. Sur la figure 2, ce système 23A de changement de pas est installé au cœur des parties tournantes ou mobiles avec par exemple un vérin 25A annulaire d'entraînement en rotation des pieds des pales. Le vérin 25A annulaire comporte un cylindre 27A monté sur un carter fixe 13A et un piston mobile 29A relié à un mécanisme de liaison 26A lequel est relié à chaque arbre 47A d'axe radial. Un carter rotatif 11A cylindrique tourne autour du carter fixe. Pour cela, au moins un palier 12A est disposé entre le carter fixe 13A et le carter rotatif 11A. Le système comprend encore un palier 34A de transfert de charge dont la bague interne est solidaire du piston mobile 29A et la bague externe reliée au mécanisme de liaison 26A et des moyens de lubrification dudit palier 34A. Grâce à un déplacement linaire du piston par suite de la commande fluidique du vérin annulaire, le système 23A assure un pivotement angulaire souhaité des pales par le mécanisme de liaison 26A et le palier 34A de transfert de charge en faisant varier leur pas.

Cependant, une telle architecture consistant à transformer une puissance arrivant de la partie fixe en un mouvement sur la partie tournante de la turbomachine présente de nombreuses difficultés. Une des difficultés réside dans le dimensionnement et l'intégration des différents éléments dans cette partie tournante. Cela s'applique notamment à l'intégration des moyens de lubrification du palier de transfert de charge qui est soumis à des contraintes thermiques et mécaniques importantes. En effet, ce palier de transfert de charge qui est destiné à la reprise des efforts de poussée de la turbomachine se déplace en translation et en rotation ce qui rend la lubrification de ce palier complexe. Le faible espace autour du vérin est contraignant pour l'intégration des moyens de lubrification qui doivent relier une source d'alimentation située en partie fixe et le palier de transfert de charge monté sur le piston mobile. D'autre part, le vérin est soumis à d'importants efforts radiaux de la partie tournante qui impliquent des déformations du vérin ainsi que des problèmes d'étanchéité se répercutant inévitablement sur les moyens de lubrification dudit palier. Ces efforts sont multipliés quand le vérin est tel qu'il participe à un rôle structural.

### 3. Objectif de l'invention

La présente invention a notamment pour objectif de proposer des moyens de lubrification du palier de transfert de charge, en particulier, d'un système de changement de pas de pales d'une hélice de turbomachine tenant compte des difficultés d'intégration dans un environnement encombré et des déplacements du moyen de commande.

### 4. Exposé de l'invention

On parvient à réaliser ces objectifs, conformément à l'invention grâce à un système de changement de pas de pales d'au moins une hélice de turbomachine munie d'une pluralité de pales, le système comprenant :
- un moyen de commande agissant sur un mécanisme de liaison relié aux pales de l'hélice, ledit moyen de commande comportant un corps fixe et un corps mobile en translation selon un axe longitudinal par rapport audit corps fixe,
- un module de transfert de charge agencé entre le mécanisme de liaison et le moyen de commande, le module de transfert de charge comportant au moins un palier de transfert de charge monté sur le corps mobile et coopérant avec le mécanisme de liaison, et
- des moyens de lubrification dudit palier,
les moyens de lubrification comprenant :
- au moins une canalisation de circulation de lubrifiant configurée pour être reliée à une source d'alimentation en lubrifiant, la canalisation s'étendant radialement à l'extérieur du corps mobile par rapport à l'axe longitudinal et comprenant au moins des première et deuxième parties tubulaires montées coulissantes de manière télescopique l'une par rapport à l'autre suivant un axe parallèle à l'axe longitudinal, la première partie étant connectée par une première extrémité amont audit corps fixe et la deuxième partie étant connectée par une première extrémité aval au corps mobile,
- des moyens de pulvérisation de lubrifiant dans au moins un palier qui sont montés sur ledit corps mobile; et
- au moins un conduit d'acheminement de lubrifiant monté sur la partie mobile et configuré de manière à transférer le lubrifiant de la canalisation de circulation auxdits moyens de pulvérisation.

Ainsi, cette solution permet d'atteindre l'objectif susmentionné. Les moyens de lubrification permettent d'alimenter le palier de transfert de charge quelle que soit la position du corps mobile sur laquelle est monté le palier de transfert de charge. En effet, les première et deuxième parties télescopiques permettent d'accompagner et de reprendre le déplacement du corps mobile du moyen de commande en translation et permet ainsi la circulation du lubrifiant des parties fixes de la turbomachine aux parties mobiles, et en particulier au palier. Par ailleurs, ces moyens de lubrification permettent une intégration dans cet environnement encombré sans complexifier le montage. A cela s'ajoute le fait que ces moyens de lubrification sont indépendants ce qui facilite leur intégration dans le système de changement de pas et sur le moyen de commande.

Suivant une autre caractéristique avantageuse, mais non limitative, la première partie coulisse à l'intérieur de la deuxième partie.

Selon une autre caractéristique de l'invention, une première extrémité de la première partie est fixée à un anneau de connexion du corps fixe, ledit anneau étant solidaire d'un carter fixe de la turbomachine. Cet anneau permet de faire la jonction entre les parties fixes et les parties mobiles.

En particulier, le moyen de commande est monté de manière non structurelle et séparée du carter fixe, le corps fixe étant solidaire d'une paroi cylindrique du carter fixe. Cet agencement permet d'une part, un gain de compacité et le passage sans risques de fuite des servitudes liées à l'alimentation et au fonctionnement du moyen de commande. Le moyen de commande de ce système de changement de pas est configuré de manière à ne plus supporter les parties tournantes et à ne plus être soumis aux efforts radiaux. En particulier, le moyen de commande ne subit plus d'effort en flexion lesquels induisaient des désalignements et des fuites néfastes pour le moyen de commande. D'autre part, grâce également à cet agencement non structural, il est possible de gérer de manière indépendante l'intégration du moyen de commande et la structure des carters fixe et rotatif.

Selon une autre caractéristique de l'invention, la première partie est équipée au voisinage de sa deuxième extrémité libre d'au moins un premier trou d'évent d'axe central et d'un deuxième trou d'évent d'axe central, lesdits axes étant perpendiculaires à l'axe longitudinal et étant définis dans plans décalés et sensiblement parallèles. De la sorte, les phénomènes de succion pouvant intervenir lors du déplacement des première et deuxième parties l'une par rapport à l'autre sont limitées. Le décalage des trous d'évent permet de ne pas fragiliser la première partie tubulaire.

Suivant un autre aspect de l'invention, la première partie est formée d'au moins une première et une seconde portions tubulaires, les première et seconde portions tubulaires alignées sensiblement suivant le même axe, les première et seconde portions tubulaires étant reliées entre elles par un organe de raccordement annulaire configuré de manière à maintenir une étanchéité entre les première et seconde portions en cas de désalignement. Ainsi, l'organe de raccordement annulaire permet de maintenir l'étanchéité entre les deux portions tubulaires tout en autorisant leur désalignement lors du déplacement de la partie mobile. Ce désalignement radial ou tangentiel est dû aux tolérances géométriques des pièces, aux tolérances de montage, ainsi qu'au rattrapage des jeux et à la déformation des pièces sous les charges de fonctionnement de la turbomachine.

De manière avantageuse, mais non limitativement, une liaison à rotule est interposée à chaque extrémité libre des première et seconde portions, et entre les parois des desdites première et seconde portions et l'organe de raccordement annulaire. La liaison rotule est une solution peu encombrante pour résoudre les problèmes de désalignement. Elle permet également de tenir compte des différentes positions du moyen de commande ainsi que des questions d'étanchéité à des fortes pression de l'ordre de 100 bar.

Suivant encore une autre caractéristique de l'invention, le module de transfert de charge comprend une virole interne sur laquelle sont montés les moyens de pulvérisation, la virole interne étant équipée d'un orifice d'axe radial coaxial avec une ouverture d'une bague intérieure dudit palier, les moyens de pulvérisation s'étendant au moins en partie à travers l'orifice et l'ouverture. Cette configuration permet une pulvérisation directement dans le palier et sur les roulements.

De manière avantageuse, mais non limitativement, des moyens de centrage agencés sur la virole interne du palier sont configurés pour centrer et orienter la pulvérisation des moyens de pulvérisation.

Suivant une autre caractéristique de l'invention, le palier de transfert de charge est équipé d'un roulement à deux rangées et les moyens de pulvérisation comprennent au moins deux gicleurs pour chaque rangée, les gicleurs étant répartis de manière azimutale autour de l'axe longitudinal.

Suivant encore une autre caractéristique de l'invention, le conduit d'acheminement comprend un corps tubulaire cintré qui est disposé au moins en partie autour du corps mobile et fixé sur une face arrière de la virole interne.

De manière avantageuse, mais non limitativement, le conduit d'acheminement est fixé sur la face arrière au moyen de colliers souples. La fixation par collier souple est nécessaire du fait de la présence de moyens d'ajustement disposés entre le corps mobile et le corps fixe pour régler la position axiale du corps mobile par rapport au corps fixe. Ainsi, le corps mobile peut disposer de toute sa course.

Suivant encore une autre caractéristique de l'invention, le conduit d'acheminement comprend des tubes s'étendant suivant un axe sensiblement parallèle à l'axe longitudinal, lesdits tubes sont connectés par une première extrémité au corps du conduit d'acheminement et par une seconde extrémité aux moyens de pulvérisation.

Avantageusement, mais non limitativement, le moyen de commande comprend un actionneur dont le corps mobile coulisse autour de la paroi cylindrique du carter fixe. En particulier, l'actionneur comprend un vérin annulaire.

L'invention pourrait également concerner un système de changement de pas de pales d'au moins une hélice de turbomachine munie d'une pluralité de pales, le système comprenant :
- un moyen de commande agissant sur un mécanisme de liaison relié aux pales de l'hélice, ledit moyen de commande comportant un corps fixe et un corps mobile en translation selon un axe longitudinal par rapport audit corps fixe,
- un module de transfert de charge agencé entre le mécanisme de liaison et le moyen de commande, le module de transfert de charge comportant au moins un palier de transfert de charge monté sur le corps mobile et coopérant avec le mécanisme de liaison, et
- des moyens de lubrification dudit au moins palier,
les moyens de lubrification comprenant au moins une canalisation de circulation de lubrifiant configurée pour être reliée à une source d'alimentation en lubrifiant, la canalisation s'étendant radialement à l'extérieur du corps mobile par rapport à l'axe longitudinal et comprenant au moins des première et deuxième parties tubulaires montées coulissantes de manière télescopique l'une par rapport à l'autre suivant un axe parallèle à l'axe longitudinal, la première partie étant connectée par une première extrémité amont audit corps fixe et la deuxième partie étant connectée par une première extrémité au corps mobile, la première partie étant formée d'au moins une première et une seconde portions tubulaires alignées sensiblement suivant le même axe et lesquelles sont reliées entre elles par un organe de raccordement annulaire configuré de manière à maintenir l'étanchéité entre les deux portions en cas de désalignement de la première partie et la deuxième partie de la canalisation.

### 5. Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés.
Sur ces dessins :
La figure 1 représente schématiquement en coupe axiale un exemple de turbomachine à système de changement de pas de pales d'une hélice conforme à l'invention ;
La figure 2 est un exemple de système de changement de pas de pales d'une hélice suivant un exemple de l'art antérieur ;
La figure 3 est une vue en coupe axiale où sont représentés plus en détails et de manière schématique des éléments d'un système de changement de pas reliés à une pale d'une hélice selon l'invention ;
La figure 4 est une vue de face d'un système de changement de pas dans une turbomachine ;
La figure 5 est une vue en perspective d'un exemple de moyen de commande selon l'invention ;
La figure 6 est une vue en coupe axiale du moyen de commande coopérant avec des moyens de lubrification selon l'invention ;
La figure 7 est une vue en coupe axiale d'une partie du moyen de commande illustrant des première et deuxième parties télescopiques des moyens de lubrification du palier de transfert de charge selon l'invention ;
La figure 8 représente une vue arrière du moyen de commande sur lequel est agencé un conduit d'acheminement ;
La figure 9 représente en perspective un exemple de conduit d'acheminement selon l'invention ;
La figure 10 est une vue en coupe axiale du moyen de commande illustrant la connexion entre le conduit d'acheminement et des moyens de pulvérisation selon l'invention ;
La figure 11 illustre suivant une coupe axiale et de détail d'un exemple de réalisation des moyens de pulvérisation selon l'invention ;
Les figures 12 et 13 représentent des exemples de réalisation d'un organe de raccordement des moyens de lubrification selon l'invention.

### 6. Description de modes de réalisation de l'invention

Sur la figure 1 et dans la suite de la description est représenté un turbopropulseur à soufflante non carénée d'axe longitudinal X destiné à équiper un aéronef. Cependant, l'invention peut s'appliquer à d'autres types de turbomachine.

La turbomachine 1 comprend une nacelle 2 dans laquelle est agencé un générateur de gaz lequel comprend, d'amont en aval, un ensemble de compresseurs 3, une chambre de combustion 4 et un ensemble de turbines 5. Une tuyère 8 est agencée en aval du générateur de gaz.

Dans la présente invention, et de manière générale, les termes « amont » et « aval » sont définis par rapport à la circulation des gaz dans la turbomachine.

L'ensemble de compresseurs 3 peut comprendre un ou deux compresseur(s) selon l'architecture du générateur de gaz à simple ou double étage. L'ensemble de turbines 5 peut comprendre une turbine haute pression et une turbine basse pression, ou deux turbines (haute pression et à pression intermédiaire) et une turbine basse pression. Le générateur de gaz entraîne la turbine basse pression autour de l'axe longitudinal X.

La turbomachine comprend un doublet d'hélices contrarotatives avec une hélice 6 amont et une hélice 7 aval. Ces deux hélices amont 6 et aval 7 sont entraînées en rotation de manière contrarotatives par la turbine basse pression par l'intermédiaire d'un dispositif de transmission mécanique 17. Les hélices amont 6 et aval 7 sont montées coaxialement à l'axe longitudinal X de la turbomachine 1 et sont disposées dans des plans parallèles radiaux, lesquels sont perpendiculaires à l'axe longitudinal X. Dans le présent exemple, les hélices 6, 7 sont montées en aval du générateur de gaz. Le dispositif de transmission mécanique 17, représenté ici schématiquement, peut comprendre un réducteur différentiel ou un boîtier à trains épicycloïdaux. Il est bien entendu possible d'entraîner directement les hélices amont 6 et aval 7 par la turbine basse pression.

Suivant la configuration décrite ci-dessus, le flux d'air entrant dans la turbomachine est comprimé dans l'ensemble de compresseurs 3, puis mélangé à du carburant et brûlé dans la chambre de combustion 4. Les gaz de combustion engendrés passent ensuite dans les turbines 5 pour entraîner, via le dispositif de transmission mécanique 17, les hélices 6, 7 en rotation inverse qui fournissent la majeure partie de la poussée. Les gaz de combustion sont expulsés à travers la tuyère 8 participant à la poussée de la turbomachine 1. Les gaz traversent une veine d'écoulement des gaz s'étendant sensiblement axialement dans la turbomachine entre la nacelle 2 et un carter médian 56 associée au générateur de gaz.

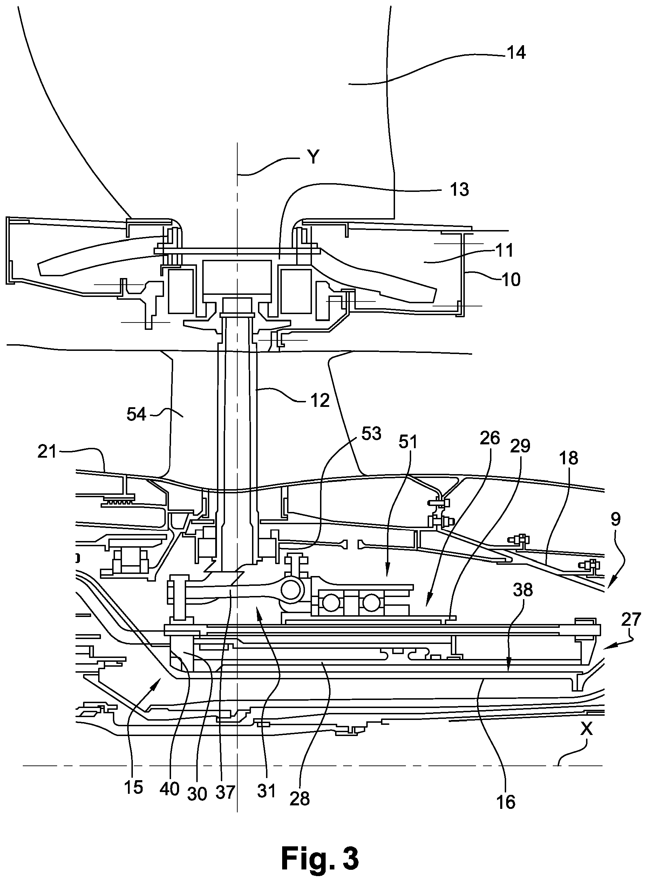

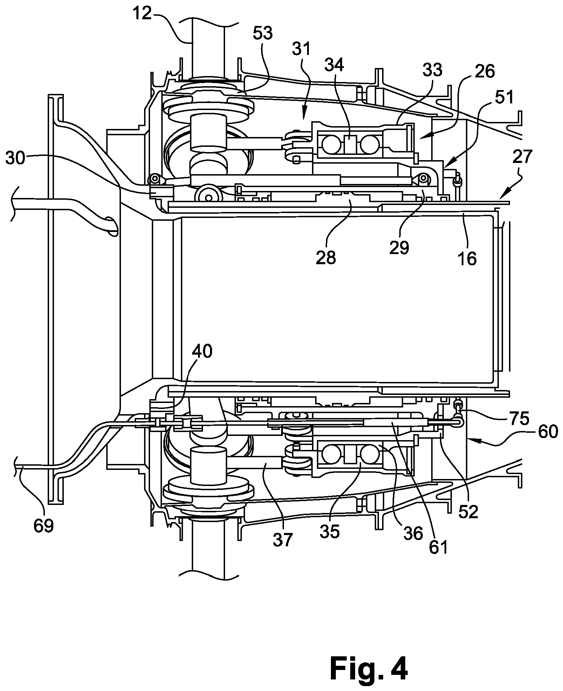

Sur les figures 3 et 4 est représenté un carter 9 ici globalement cylindrique monté rotatif vis-à-vis de la nacelle 2 de la turbomachine autour d'un arbre de rotor d'axe longitudinal X. Le carter 9 cylindrique est également lié à une partie correspondante du dispositif de transmission mécanique 17. Ce carter rotatif 9 ou carter rotorique comprend plusieurs peaux ou parois de révolution dont au moins une paroi externe 18 par rapport à un axe radial Y perpendiculaire à l'axe longitudinal X. Dans la suite de la description, les termes « haut », « bas », « supérieur », « inférieur » et « au-dessus » sont définis par rapport à l'axe radial Y au regard de l'éloignement par rapport à l'axe longitudinal X. Le carter rotatif 9 comprend des logements 11 radiaux et des passage 53 radiaux qui sont coaxiaux et qui sont traversés chacun par un arbre 12 d'axe radial Y, ci-après arbre radial 12, relié à un pied 13 de pale 14 d'une hélice 6, 7 correspondante. Les pales 14 s'étendent radialement à l'extérieur de la nacelle 2. En particulier, le carter 9 comprend un anneau polygonal 10, pourvu des logements 11 radiaux ici cylindriques régulièrement répartis sur sa périphérie. Quant à la paroi externe 18, celle-ci comprend les passages 53 radiaux ici cylindriques régulièrement répartis sur sa périphérie et traversés par les arbres radiaux 12. Ces derniers s'étendent radialement à travers un bras structural 54 reliant l'anneau polygonal 10 à une peau radialement interne 21 du carter 9. Cette peau radialement interne 21 est en aval du carter médian 56. Elle forme une partie de la paroi de la veine d'écoulement des gaz. Chaque arbre radial 12 est maintenu dans son logement 53 au moyen de palier de guidage en rotation permettant de maintenir les arbres radiaux dans leurs logements 53. Le carter rotatif 9 est supporté directement par des paliers à roulements sur un carter fixe 15 ou carter statorique pour assurer sa rotation par rapport à l'axe longitudinal X. Le carter fixe 15 et le carter rotatif 9 sont coaxiaux.

La turbomachine comprend un système 26 de changement de pas des pales 14 de l'hélice 6 permettant de faire varier le calage ou le pas des pales 14 autour de leur axes radiaux de sorte qu'elles occupent des positions angulaires selon les conditions de fonctionnement de la turbomachine et les phases de vol concernées.

En référence aux figures 3 et 4, le système de changement 26 de pas comprend un moyen de commande 27 commandant le changement de pas de chacune des pales 14 et un mécanisme de liaison 31 reliant le moyen de commande 27 aux pieds 13 des pales 14. Le moyen de commande 27 est logé entre le carter rotatif 9 et le carter 15 fixe. Le moyen de commande 27 comprend un actionneur lequel comporte un corps fixe 28 et un corps mobile 29 en translation par rapport au corps fixe 28 le long de l'axe X. L'actionneur est agencé de manière à déplacer sensiblement axialement le mécanisme de liaison 31 qui est relié aux arbres radiaux 12 des pieds de pales de telle manière que le déplacement axial du mécanisme de liaison 31 entraîne le changement de pas des pales. Cet actionneur est rapporté sur le carter fixe 15. C'est-à-dire que celui-ci est séparé du carter fixe 15 et ne constitue pas un élément structural faisant partie du carter fixe 15. Les arbres radiaux 12 pivotent autour de l'axe Y dans les passages 53 radiaux et logements 11 radiaux.

Le système 26 de changement de pas comprend un module 51 de transfert de charge équipé d'un palier 34 de transfert de charge et disposé entre le mécanisme de liaison 31 et le corps mobile 29 de manière à assurer la transmission des efforts axiaux exercés par le corps mobile 29 de l'actionneur. Le mécanisme de liaison 31 comprend un ensemble de bielles 37 articulées qui sont réparties régulièrement autour de l'actionneur et qui sont destinées à agir sur les pieds des pales 14 via les arbres radiaux 12 pour les entraîner en rotation autour de leur axe Y. Il y a autant de bielles 37 que de pales. L'actionneur dans la présente invention comprend avantageusement un vérin annulaire constitué de sa tige mobile par rapport à un cylindre fixe solidaire du carter fixe 15.

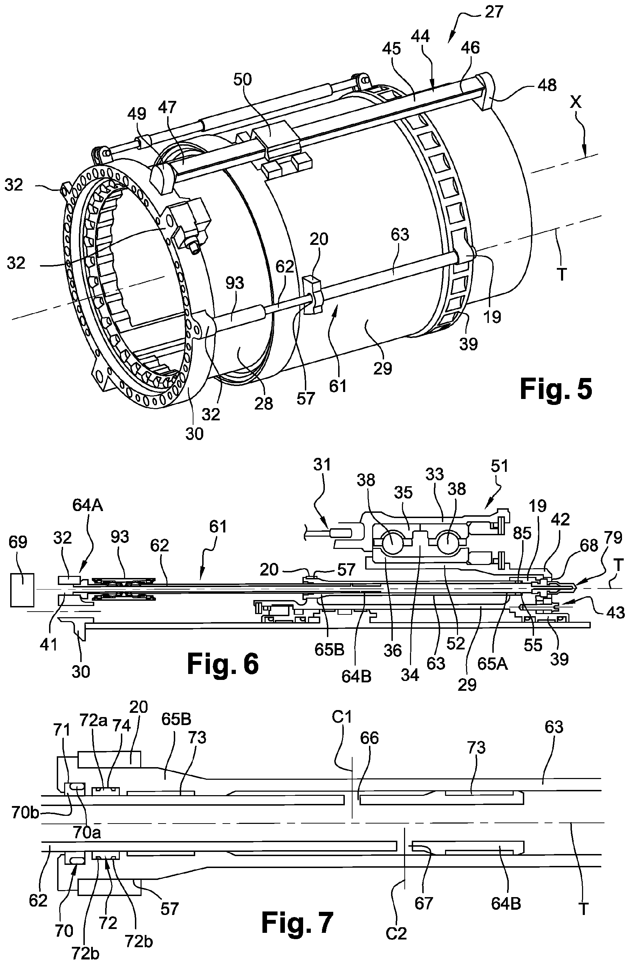

En référence à la figure 5 sur laquelle est illustré plus précisément l'actionneur, le corps fixe 28 est ici cylindrique de section circulaire. Ce corps fixe 28 entoure une paroi 16 cylindrique du carter fixe 15 et est monté solidaire de cette paroi 16 cylindrique de manière à être immobilisé en rotation et en translation par rapport au carter fixe 15 (cf. figure 4). A cet effet, le corps fixe 28 comprend un anneau de connexion 30 prévu à une extrémité amont du corps fixe 28 et en butée contre un épaulement 40 du carter fixe 15. L'anneau de connexion 30 est monté sur le carter fixe 15. Le corps mobile 29 est agencé autour du corps fixe 28. De la sorte, le corps mobile 29 se déplace axialement sous l'action d'une commande de l'actionneur. Le corps mobile 29 se déplace uniquement en translation. Celui-ci 29 est immobilisé en rotation par rapport au corps fixe au moyen d'un dispositif anti-rotation 44 fixé au corps fixe 28 et au corps mobile 29. Ce dispositif anti-rotation 44 permet notamment d'empêcher la rotation du corps mobile 29 autour du corps fixe 28 lors du fonctionnement de la turbomachine. Le dispositif anti-rotation 44 comporte une traverse 45 s'étendant suivant un axe sensiblement parallèle à l'axe X. La traverse 45 présente une première extrémité 46 reliée à une chape 48 fixée au bord aval du corps fixe 28 et une deuxième extrémité 47 opposée reliée à un piétement 49 prévu sur l'anneau de connexion 30. Le dispositif anti-rotation 44 comporte en outre un support 50 fixé sur le corps mobile 29 faisant office de butée radiale. Ce support 50 est traversé par la traverse 45 et permet également le guidage du corps mobile 29 lors de son déplacement axial.

L'anneau de connexion 30 est pourvu d'interfaces de connexion 32 permettant le raccordement de divers équipements nécessaires à l'alimentation et au fonctionnement de l'actionneur. Ces interfaces de connexion 32 comprennent des connecteurs mécaniques, hydrauliques et/ou électriques assurant le passage des canalisations hydrauliques basse pression et haute pression de commande (débit et pression élevés).

En référence à la figure 6, le module 51 de transfert de charge comprend une virole externe 33 et une virole interne 52 annulaires. La virole externe 33 est reliée au mécanisme de liaison 31 tandis que la virole interne 52 est reliée au corps mobile 29. A cet effet, la virole interne 52 comprend un flasque 42 annulaire s'étendant suivant l'axe radial Y et étant solidarisé au niveau d'une extrémité aval 39 du corps mobile 29. Des moyens de fixation tels que des vis 43 permettent de solidariser le flasque 42 au corps mobile 29. Le palier 34 comprend une bague extérieure 35 solidaire de la virole 33 et une bague intérieure 36 solidaire de la virole 52. Le palier 34 est ici formé par un roulement à deux rangées de billes 38 lesquelles peuvent être du type à contact oblique orientés en sens opposés de manière à optimiser la transmission des efforts axiaux.

Le système 26 de changement de pas des pales comprend des moyens de lubrification 60 du palier 34 de transfert de charge comportant au moins une canalisation 61 de circulation de lubrifiant qui est configurée pour être reliée à une source d'alimentation 69 en lubrifiant pour son alimentation. Cette source d'alimentation 69 est installée sur les parties fixes de la turbomachine. La canalisation 61 s'étend radialement à l'extérieur du corps mobile 29 par rapport à l'axe longitudinal X. En d'autres termes, la canalisation 61 s'étend radialement au-dessus du corps mobile 29 et du corps fixe 28. La canalisation s'étend également axialement suivant un axe T parallèle à l'axe longitudinal X. Celle-ci est reliée d'un côté à l'anneau 30 sur laquelle est connectée la source d'alimentation 69 en lubrifiant et d'un autre côté au corps mobile 29. Dans le présent exemple, la canalisation 61 est formée d'une première partie 62 et d'une deuxième partie 63 tubulaires s'étendant suivant l'axe T.

Sur la figure 6, la première partie 62 présente une première extrémité amont 64A qui est reçue dans une première cavité 41 d'une interface 32 de l'anneau 30 dans laquelle elle est fixée. Cette première extrémité amont 64A est fixée par vissage ou par d'autres moyens similaires. La deuxième partie 63 présente une première extrémité 65A, ici aval, qui est connectée hydrauliquement dans une seconde cavité 55 d'un premier bossage local 19 positionné à l'extrémité aval 39 du corps mobile 29 de l'actionneur. Les première et les deuxième parties 62, 63 sont montées coulissantes de manière télescopique l'une par rapport à l'autre suivant l'axe T. En particulier, la première partie 62 coulisse dans la deuxième partie 63. Bien entendu, la deuxième partie 63 peut être agencée de manière à coulisser dans la première partie 62. En d'autres termes, la première partie 62 est fixe par rapport au corps fixe 28 et la deuxième partie 63 se déplace axialement suivant le déplacement du corps mobile 29 par rapport au corps fixe 28.

En référence à la figure 7, la première partie 62 comprend au niveau de sa deuxième extrémité aval 64B libre laquelle coulisse à l'intérieur de la deuxième partie 63, un premier trou d'évent 66 d'axe central C1 perpendiculaire à l'axe T. Un deuxième trou d'évent 67 d'axe central C2 perpendiculaire à l'axe T est également prévu au niveau de la deuxième extrémité 64B libre de la première partie 62. Les axes centraux C1, C2 de ces premier et deuxième trous d'évent 66, 67 sont décalés l'un par rapport à l'autre et sont définis dans des plans sensiblement parallèles. Une deuxième extrémité 65B libre de la deuxième partie 63 est maintenue radialement en position et guidée par un alésage 57 formé dans un second bossage local 20 du corps mobile 29. La deuxième extrémité libre 65B comprend des segments de guidage 73 pour assurer un guidage correct entre les première et deuxième parties de la canalisation. Ces segments de guidage 73 sont fendus et installés dans des gorges (non représentées) de faible profondeur formées dans la paroi de la deuxième partie 63.

Les moyens de lubrification 60 comprennent des moyens d'étanchéité assurant l'étanchéité entre la première partie 62 et la deuxième partie 63 de la canalisation 60. Sur la figure 7, les moyens d'étanchéité comportent un premier joint 72 permettant de réaliser de manière pérenne l'étanchéité entre les première et deuxième parties 62, 63 télescopiques. Ce premier joint 72 est de type dynamique car celui-ci doit autoriser le déplacement relatif de la deuxième partie 63 par rapport à la première partie 62. Ce joint 72 dynamique comprend un premier élément 72a et au moins un second élément 72b réalisés dans un matériau polymère. Ici, deux seconds éléments 72b sont prévus. Les premier et second éléments 72a, 72b sont formés dans des matériaux polymères différents. Avantageusement, mais non limitativement, le premier élément 72a est réalisé dans un élastomère et les seconds éléments 72b sont réalisés dans un polytétrafluoroéthylène ou équivalent. Le premier élément 72a présente sensiblement la forme d'un T. Les deux seconds éléments 72b ont une forme annulaire et reposent sur les branches du T du premier élément 72a. En particulier, les seconds éléments 72b sont de part et d'autre de la jambe du T. Ce joint 72 est monté dans une première gorge 74 formée dans la paroi de la deuxième partie 63. La première gorge 74 est orientée vers la paroi externe de la première partie 62 de la canalisation 61. Une fois monté, le premier élément 72a en élastomère est écrasé ou comprimé par la paroi de la deuxième partie 63 et les deux branches du T du premier élément 72a remontent respectivement de part et d'autre des seconds éléments 72b.

Ces moyens d'étanchéité comportent également un deuxième joint racleur 70 annulaire installé au niveau de l'extrémité libre 65B de la deuxième partie 63. Le deuxième joint racleur 70 permet de nettoyer la paroi externe de la deuxième partie 62 de canalisation de tout dépôt de saletés (poussières, sable, etc.) lors du coulissement de la deuxième partie 63 afin de préserver l'intégrité physique du premier joint 72. Ce deuxième joint racleur 70 est logé dans une deuxième gorge 71 ouverte formée dans la paroi de la deuxième partie 63. La deuxième gorge 71 est orientée vers la paroi externe de la première partie 62 de la canalisation 61. Dans cet exemple, le deuxième joint racleur 70 comporte une première partie 70a et une deuxième partie 70b réalisées dans un matériau en polymère. La première partie 70a du deuxième joint racleur 70 est réalisée dans un élastomère et la deuxième partie 70b est réalisée dans un polytétrafluoroéthylène ou équivalent. La deuxième partie 70b a une forme sensiblement en L et est en contact avec la paroi de la première partie 62. La première partie 70a est annulaire et est insérée entre la deuxième partie 70b et la paroi interne de la deuxième partie 63 de canalisation. La première partie 70a permet de comprimer la deuxième partie 70b de sorte que celui-ci puisse racler la paroi externe de la première partie 62.

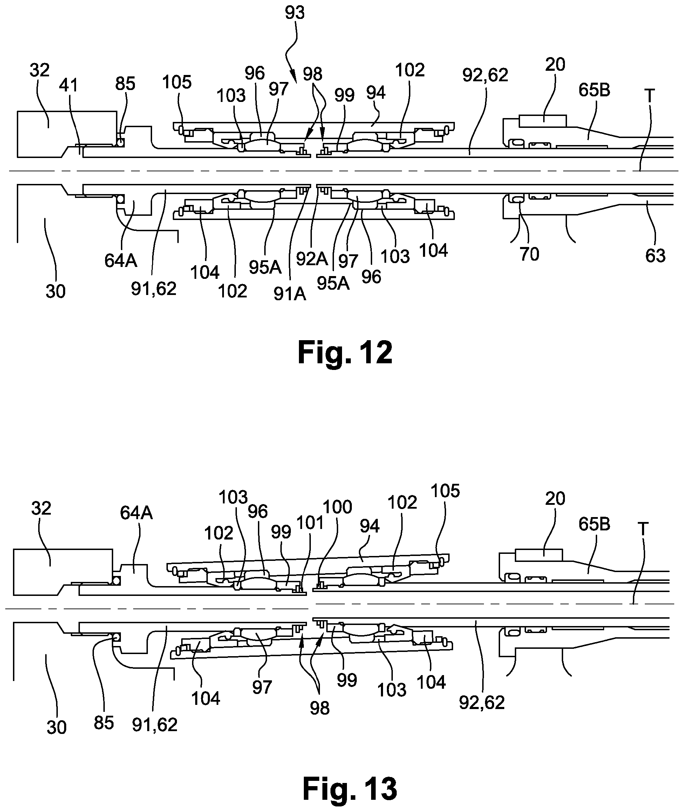

Les moyens d'étanchéité 60 comprennent encore des joints 85 disposés autour des premières extrémités 64A, 65A des première et deuxième parties 62, 63 à l'endroit de leur fixation avec le corps mobile et le corps fixe (cf. figures 6 et 12).

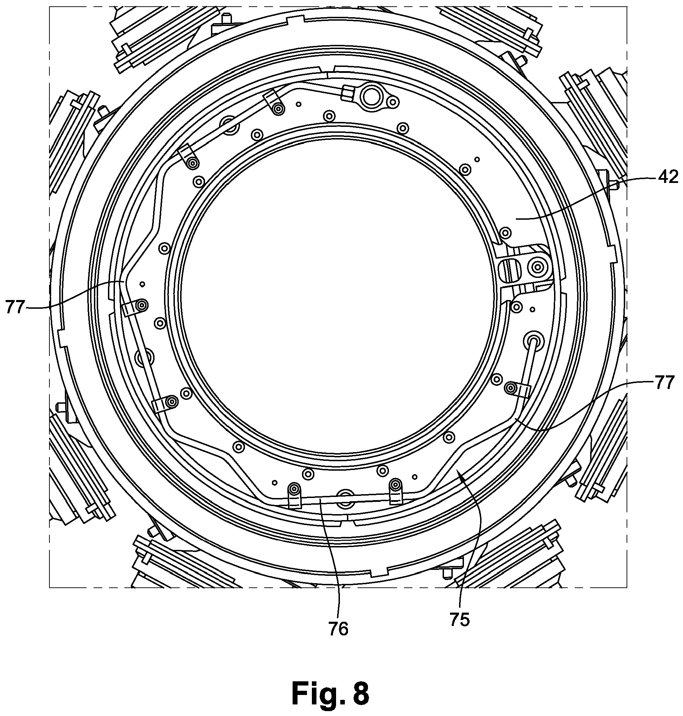

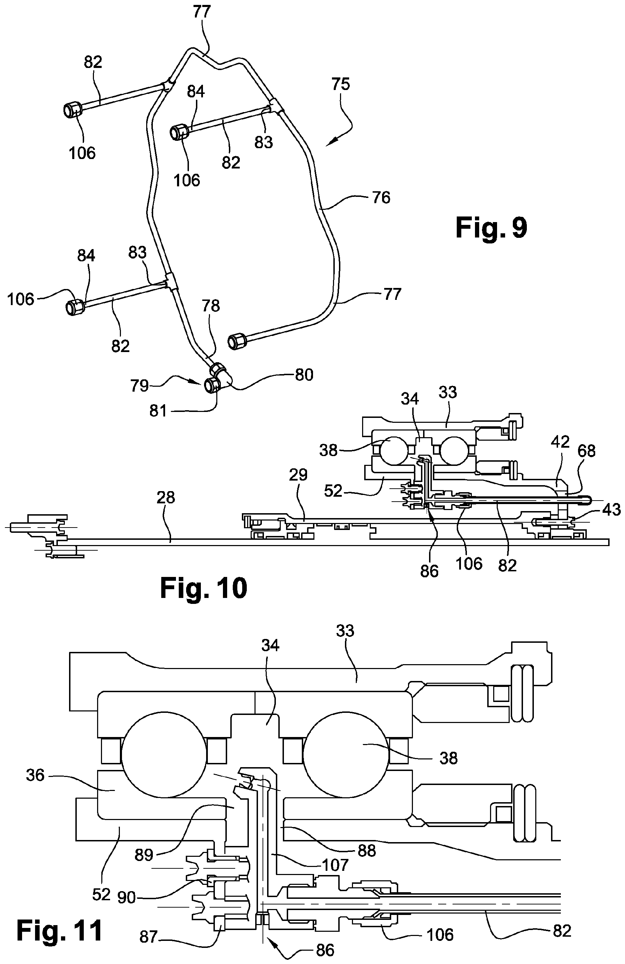

Sur les figures 8 et 9 est illustré un conduit 75 d'acheminement de lubrifiant des moyens de lubrification 60, ce conduit transférant le lubrifiant depuis la canalisation 61 vers le palier 34. A cet effet, le conduit 75 comprend un corps tubulaire 76 qui est cintré et qui est disposé au moins en partie autour de l'actionneur et en particulier à l'aval du corps mobile 29. Le conduit 75 d'acheminement comprend une extrémité d'entrée 78 qui est connectée hydrauliquement dans la cavité 55 du premier bossage local 19 du corps mobile 29. Pour cela, cette extrémité d'entrée 78 est équipée d'un raccord 79 lequel comprend un corps 80 avec un orifice de passage et un écrou 81 de raccordement hydraulique monté sur ledit corps 80. Plus précisément, le conduit 75 est fixé sur la face arrière de la virole interne 52 (cf. figure 8). La face arrière est portée par le flasque 42. Ce dernier comprend des lumières 68 (cf. figures 6 et 10) traversant la paroi du flasque 42 et dont une est traversée par le raccord 79. Le conduit 75 est fixé au moyen par exemple de colliers 77 souples. De tels colliers 77 souples sont reliés à des portions coudées du corps tubulaire 76 de manière à créer de la souplesse. Le conduit 75 comprend également une pluralité de tubes 82 axiaux qui sont chacun connecté au corps 76 par une première extrémité 83. La seconde extrémité 84 opposée axialement de chaque tube 82 axial comprend un embout de fixation 106 destiné à se connecter à des moyens de pulvérisation 86 de lubrifiant dans le palier 34 de transfert de charge. Les tubes 82 axiaux traversent les lumières 68 ménagées dans la paroi du flasque 42 et s'étendent axialement à l'extérieur du corps mobile 29. En particulier, les tubes 82 sont agencés entre le corps mobile 29 et la virole interne 52. Le conduit 75 d'acheminement est réalisé dans un matériau métallique. Le raccord 79 est également réalisé dans un matériau métallique adapté au matériau métallique du premier bossage local 19 du corps mobile 29.

En référence aux figures 10 et 11, des moyens de pulvérisation 86 des moyens de lubrification sont montés sur la virole interne 52 du module de transfert de charge 51. La virole interne 52 comprend une jupe 87 annulaire s'étendant suivant l'axe radial Y et sur laquelle sont fixés les moyens de pulvérisation 86 avec des organes de fixation adéquats. Les moyens de pulvérisation 86 sont répartis azimutalement autour de l'axe longitudinal X. La virole interne 52 est également pourvue d'un orifice 88 d'axe radial traversant la paroi de part et d'autre radialement. La bague intérieure 36 du palier 34 comprend également une ouverture 89 d'axe radial traversant sa paroi de part et d'autre radialement. Les axes de l'ouverture 89 et de l'orifice 88 sont coaxiaux. Au moins une partie des moyens de pulvérisation 86 s'étend radialement à travers l'orifice 88 et l'ouverture 89 de manière à pulvériser le lubrifiant à l'intérieur du palier 34 et directement sur les roulements 38. Un ciblage correct des moyens de pulvérisation 86 est réalisé grâce à des moyens de centrage 90 agencés sur la virole interne 52 de manière à orienter et centrer leur pulvérisation. Ces moyens de centrage 90 sont avantageusement, mais non limitativement, des douilles centreuses qui sont fixées sur la jupe 87 de la virole interne 52. Des éléments de fixation tels que des vis permettent la fixation des douilles. De manière alternative, le positionnement des moyens de pulvérisation est réalisable par des pions.

Les moyens de pulvérisation 86 comprennent, dans le présent exemple, des gicleurs 107. Pour chaque rangée de roulements est prévu au moins deux gicleurs 107 de manière à prévenir les risques d'obstruction d'un des gicleurs. De manière avantageuse, les gicleurs 107 sont disposés et répartis les uns par rapport aux autres suivant une section angulaire de l'ordre de 180° pour un refroidissement et une lubrification homogène des roulements. Toutefois, les gicleurs 107 peuvent être disposés à proximité des uns des autres pour des questions d'intégration. La position des gicleurs 107 est pilotée par des contraintes d'intégration.

Suivant un autre aspect de l'invention tel qu'illustré sur les figures 12 et 13, la première partie 62 tubulaire de la canalisation 61 est formée d'au moins une première portion 91 tubulaire et d'une seconde portion 92 tubulaire qui sont reliées entre elles par un organe de raccordement 93 configuré de manière à permettre le désalignement de la première partie 62 et la deuxième partie 63 de la canalisation 61. Comme décrit précédemment, la première extrémité 64A de la première partie 62 est fixée sur l'anneau 30 de l'actionneur via une interface 32. Cette liaison fixe impose la direction de cette première partie 62 qui est fixe par rapport à la deuxième partie 63. L'organe de raccordement 93 et la première partie 62 formée de ces deux portions 91, 92 permettent de résoudre les problèmes de désalignement pouvant survenir entre les première et deuxième parties de la canalisation 61 lors du déplacement axial du corps mobile 29 de l'actionneur. Ces problèmes de désalignement peuvent être du fait des dispersions de fabrication, à savoir, des tolérances géométriques, des tolérances de montage entre différentes pièces de l'actionneur, et/ou de la déformation de l'actionneur subissant les efforts radiaux de la partie tournante.

L'organe de raccordement 93 externe comprend une paroi 94 sensiblement cylindrique qui enveloppe les extrémités libres 91A, 92A des première et seconde portions 91, 92 tubulaires. A chaque extrémité libre 91A, 92A est agencée une liaison à rotule 95. Chaque liaison à rotule 95 est interposée entre une paroi des première et seconde portions 91, 92 tubulaires et la paroi 94 de l'organe de raccordement 93. La liaison à rotule 95 est avantageusement, mais non limitativement réalisée par un palier lisse ayant une bague externe 96 et une bague interne 97. La paroi 94 de l'organe de raccordement 93 porte la bague externe 96 tandis que la paroi de chaque première et seconde portions porte respectivement une bague interne 97. Le palier lisse à rotule est monté glissant de manière à permettre les pivotements et basculements de l'organe de raccordement 93 comme cela est illustré sur la figure 13 en cas de désalignement. Un système 98 de fixation du palier lisse à rotule disposé sur le bord de chaque extrémité libre 91A, 92A permet de maintenir les paliers à rotule sur les portions tubulaires. Ce système de fixation 98 comprend un écrou interne 99 et un frein d'écrou 100 bloquant axialement la bague interne 97 du palier lisse à rotule. Est également prévu un anneau élastique 101 de maintien du frein d'écrou. Des éléments d'étanchéité 102 sont installés de part et d'autre axialement des deux rotules. Les éléments d'étanchéité 102 peuvent être un joint à lèvre ou un joint torique. Pour pourvoir utiliser des éléments standards, une entretoise 103 est placée axialement entre une bague interne 97 et un élément d'étanchéité 102 de chaque palier lisse à rotule. Un écrou externe 104 et son système de freinage 105 permettent de finaliser le montage. L'écrou externe 104 et le système de freinage 105 sont portés par l'organe de raccordement 93, en particulier la paroi 94.

## Revendications

1. Système (26) de changement de pas de pales (14) d'au moins une hélice (6, 7) de turbomachine munie d'une pluralité de pales, le système (26) comprenant :
- un moyen de commande (27) agissant sur un mécanisme de liaison (31) relié aux pales de l'hélice, ledit moyen de commande (27) comportant un corps fixe (28) et un corps mobile (29) en translation selon un axe longitudinal (X) par rapport audit corps fixe (28),
- un module (51) de transfert de charge agencé entre le mécanisme de liaison (31) et le moyen de commande (27), le module (51) de transfert de charge comportant au moins un palier (34) de transfert de charge monté sur le corps mobile et coopérant avec le mécanisme de liaison, et
- des moyens de lubrification (60) dudit palier (34)
**caractérisé en ce que** les moyens de lubrification (60) comprennent :
- au moins une canalisation (61) de circulation de lubrifiant configurée pour être reliée à une source (69) d'alimentation en lubrifiant, la canalisation s'étendant radialement à l'extérieur du corps mobile (29) par rapport à l'axe longitudinal (X) et comprenant au moins des première et deuxième parties (62, 63) tubulaires montées coulissantes de manière télescopique l'une par rapport à l'autre suivant un axe parallèle (T) à l'axe longitudinal (X), la première partie (62) étant connectée par une première extrémité amont (64A) audit corps fixe (28) et la deuxième partie (63) étant connectée par une première extrémité aval (65A) au corps mobile (29),
- des moyens de pulvérisation (86) de lubrifiant dans le palier qui sont montés sur ledit corps mobile (29), et
- au moins un conduit (75) d'acheminement de lubrifiant monté sur le corps mobile (29) et configuré de manière à transférer le lubrifiant de la canalisation de circulation (61) auxdits moyens de pulvérisation.

2. Système (26) selon la revendication précédente, **caractérisé en ce que** la première partie (62) coulisse à l'intérieur de la deuxième partie(63).

3. Système (26) selon l'une quelconque des revendications précédentes, **caractérisé en ce que** la première partie (62) comporte une première extrémité fixée à un anneau de connexion (30) du corps fixe (28), ledit anneau (30) étant solidaire d'un carter fixe (15) de la turbomachine.

4. Système (26) selon la revendication précédente, **caractérisé en ce que** la première partie (61) est équipée au voisinage de sa deuxième extrémité libre (64B) d'au moins un premier trou d'évent (66) d'axe central (C1) et d'un deuxième trou d'évent (67) d'axe central (C2), lesdits axes (C1, C2) étant perpendiculaires à l'axe longitudinal (X) et étant définis dans des plans décalés et sensiblement parallèles.

5. Système (26) selon l'une quelconque des revendications, **caractérisé en ce que** la première partie (62) est formée d'au moins une première et une seconde portions (91, 92) tubulaires alignées sensiblement suivant le même axe (T), les première et seconde portions (91, 92) tubulaires étant reliées entre elles par un organe de raccordement (93) annulaire configuré de manière à maintenir une étanchéité entre les première et seconde portions (91, 92) en cas de désalignement.

6. Système (26) selon la revendication précédente, **caractérisé en ce qu'**une liaison à rotule (95) est interposée à chaque extrémité libre (91A, 92A)des première et seconde portions (91, 92) et entre les parois des desdites première et seconde portions (91, 92) et de l'organe de raccordement (93) annulaire.

7. Système (26) selon l'une quelconque des revendications précédentes, **caractérisé en ce que** le module (51) de transfert de charge comprend une virole interne (52) sur laquelle sont montés les moyens de pulvérisation (86), la virole interne (52) étant équipée d'un orifice (88) d'axe radial coaxial avec une ouverture (89) d'une bague intérieure (36) dudit palier (34), les moyens de pulvérisation (86) s'étendant au moins en partie à travers l'orifice (88) et l'ouverture (89).

8. Système (26) selon l'une quelconque des revendications précédentes, **caractérisé en ce que** le palier (34) de transfert de charge est équipé d'un roulement à deux rangées et les moyens de pulvérisation (86) comprennent au moins deux gicleurs (107) pour chaque rangée, les gicleurs (107) étant répartis de manière azimutale autour dudit axe longitudinal (X).

9. Système (26) selon l'une quelconque des revendications précédentes, **caractérisé en ce que** le conduit (75) d'acheminement comprend un corps (76) tubulaire cintré qui est disposé au moins en partie autour du corps mobile (29) et fixé sur une face arrière de la virole interne (52).

10. Système (26) selon la revendication précédente, **caractérisé en ce que** le conduit (75) d'acheminement comprend des tubes (82) s'étendant suivant un axe sensiblement parallèle à l'axe longitudinal (X), lesdits tubes étant connectés par une première extrémité (83) au corps (76) du conduit (75) de d'acheminement et par une seconde extrémité (84) aux moyens de pulvérisation (86).

## Patentansprüche

1. System (26) zum Ändern der Steigung der Schaufeln (14) mindestens eines Propellers (6, 7) einer Turbomaschine, der mit einer Vielzahl von Schaufeln ausgestattet ist, wobei das System (26) umfasst:
- ein Steuermittel (27), das auf einen Verbindungsmechanismus (31) wirkt, der mit den Schaufeln des Propellers verbunden ist, wobei das Steuermittel (27) einen festsitzenden Körper (28) und einen beweglichen Körper (29) umfasst, der gemäß in Translation einer Längsachse (X) in Bezug auf den festsitzenden Körper (28) verschiebbar ist,
- ein Lastübertragungsmodul (51), das zwischen dem Verbindungsmechanismus (31) und dem Steuermittel (27) angeordnet ist, wobei das Lastübertragungsmodul (51) mindestens ein Lastübertragungslager (34) umfasst, das auf dem beweglichen Körper montiert ist und mit dem Verbindungsmechanismus zusammenwirkt, und
- Mittel zum Schmieren (60) des Lagers (34),
**dadurch gekennzeichnet, dass** die Mittel zum Schmieren (60) umfassen:
- mindestens einen Schmiermittelumlaufkanal (61), der ausgestaltet ist, um mit einer Schmiermittelversorgungsquelle (69) verbunden zu werden, wobei sich der Kanal radial außerhalb des beweglichen Körpers (29) in Bezug auf die Längsachse (X) erstreckt und mindestens erste und zweite rohrförmige Teile (62, 63) umfasst, die teleskopartig gemäß einer zur Längsachse (X) parallelen Achse (T) zueinander gleitend montiert sind, wobei der erste Teil (62) durch ein erstes stromaufwärtiges Ende (64A) an den festsitzenden Körper (28) angeschlossen ist und der zweite Teil (63) durch ein zweites stromabwärtiges Ende (65A) an den beweglichen Körper (29) angeschlossen ist,
- Mittel zum Zerstäuben (86) von Schmiermittel in dem Lager, die auf dem beweglichen Körper (29) montiert sind, und
- mindestens eine Leitung (75) zur Schmiermittelbeförderung, die auf dem beweglichen Körper (29) montiert ist und so ausgestaltet ist, dass sie das Schmiermittel von dem Umlaufkanal (61) zu den Mitteln zum Zerstäuben befördert.

2. System (26) nach dem vorstehenden Anspruch, **dadurch gekennzeichnet, dass** der erste Teil (62) im Inneren des zweiten Teils (63) gleitet.

3. System (26) nach einem der vorstehenden Ansprüche, **dadurch gekennzeichnet, dass** der erste Teil (62) ein erstes Ende umfasst, das an einem Anschlussring (30) des festsitzenden Körpers (28) fixiert ist, wobei der Ring (30) mit einem festsitzenden Gehäuse (15) der Turbomaschine fest verbunden ist.

4. System (26) nach dem vorstehenden Anspruch, **dadurch gekennzeichnet, dass** der erste Teil (61) in der Nähe seines zweiten freien Endes (64B) mit mindestens einem ersten Lüftungsloch (66) mit einer Mittelachse (C1) und einem zweiten Lüftungsloch (67) mit einer Mittelachse (C2) ausgestattet ist, wobei die Achsen (C1, C2) senkrecht zu der Längsachse (X) verlaufen und in versetzten und im Wesentlichen parallelen Ebenen definiert sind.

5. System (26) nach einem der Ansprüche, **dadurch gekennzeichnet, dass** der erste Teil (62) aus mindestens einem ersten und einem zweiten rohrförmigen Abschnitt (91, 92) gebildet wird, die im Wesentlichen gemäß der gleichen Achse (T) ausgerichtet sind, wobei der erste und zweite rohrförmige Abschnitt (91, 92) durch ein ringförmiges Verbundungselement (93) miteinander verbunden sind, das so ausgestaltet ist, dass es eine Dichtheit zwischen dem ersten und zweiten Abschnitt (91, 92) im Fall einer Fehlausrichtung aufrechterhält.

6. System (26) nach dem vorstehenden Anspruch, **dadurch gekennzeichnet, dass** eine Kugelgelenkverbindung (95) an jedem freien Ende (91A, 92A) des ersten und zweiten Abschnitts (91, 92) und zwischen den Wänden des ersten und zweiten Abschnitts (91, 92) und dem ringförmigen Verbundungselement (93) eingefügt ist.

7. System (26) nach einem der vorstehenden Ansprüche, **dadurch gekennzeichnet, dass** das Lastübertragungsmodul (51) eine Innenmanschette (52) umfasst, auf der die Mittel zum Zerstäuben (86) montiert sind, wobei die Innenmanschette (52) mit einem Loch (88) mit einer radialen Achse versehen ist, die koaxial ist mit einer Öffnung (89) eines Innenrings (36) des Lagers (34) ist, wobei sich die Mittel zum Zerstäuben (86) mindestens teilweise durch das Loch (88) und die Öffnung (89) erstrecken.

8. System (26) nach einem der vorstehenden Ansprüche, **dadurch gekennzeichnet, dass** das Lastübertragungslager (34) mit einem zweireihigen Lager ausgestattet ist und die Mittel zum Zerstäuben (86) mindestens zwei Düsen (107) für jede Reihe umfassen, wobei die Düsen (107) azimutal um die Längsachse (X) verteilt sind.

9. System (26) nach einem der vorstehenden Ansprüche, **dadurch gekennzeichnet, dass** die Beförderungsleitung (75) einen gewölbten, rohrförmigen Körper (76) umfasst, der mindestens teilweise um den beweglichen Körper (29) angeordnet ist und auf einer hinteren Fläche der Innenmanschette (52) fixiert ist.

10. System (26) nach dem vorstehenden Anspruch, **dadurch gekennzeichnet, dass** die Beförderungsleitung (75) Rohre (82) umfasst, die sich gemäß einer Achse erstrecken, die im Wesentlichen parallel zu der Längsachse (X) verläuft, wobei die Rohre durch ein erstes Ende (83) an den Körper (76) der Beförderungsleitung (75) und durch ein zweites Ende (84) an die Mittel zum Zerstäuben (86) angeschlossen sind.

## Claims

1. System (26) for changing the pitch of blades (14) of at least one turbomachine propeller (6, 7) provided with a plurality of blades, the system (26) comprising:
- a control means (27) acting on a connecting mechanism (31) that is connected to the blades of the propeller, said control means (27) comprising a fixed body (28) and a movable body (29) which is mobile in translation along a longitudinal axis (X) with respect to said fixed body (28),
- a load-transfer module (51) arranged between the connecting mechanism (31) and the control means (27), the load-transfer module (51) comprising at least one load-transfer bearing (34) mounted on the movable body and cooperating with the connecting mechanism, and
- means (60) for lubricating said bearing (34)
**characterised in that** the means (60) for lubricating comprise:
- at least one lubricant duct (61) configured to be connected to a source (69) of supply of lubricant, the duct extending radially outside the movable body (29) with respect to the longitudinal axis (X) and comprising at least first and second tubular parts (62, 63) telescopically slidably mounted with respect to one another along an axis (T) parallel to the longitudinal axis (X), the first part (62) being connected by a first upstream end (64A) to said fixed body (28) and the second part (63) being connected by a first downstream end (65A) to the movable body (29),
- spraying means for spraying (86) lubricant in the bearing that are mounted on said movable body (29), and
- at least one lubricant supply conduit (75) mounted on the movable body (29) and configured to transfer the lubricant from the circulation duct (61) to said spraying means.

2. System (26) according to the preceding claim, **characterised in that** the first part (62) slides inside the second part (63).

3. System (26) according to one of the preceding claims, **characterised in that** the first part (62) comprises a first end fixed to a connection ring (30) of the fixed body (28), said ring (30) being secured to a fixed casing (15) of the turbomachine.

4. System (26) according to the preceding claim, **characterised in that** the first part (61) is provided in the vicinity of its second free end (64B) with at least one first vent hole (66) with a central axis (C1) and a second vent hole (67) with a central axis (C2), said axes (C1, C2) being perpendicular to the longitudinal axis (X) and being defined in offset and substantially parallel planes.

5. System (26) according to any one of the claims, **characterised in that** the first part (62) is formed from at least one first and second tubular portions (91, 92) aligned substantially along the same axis (T), with the first and second tubular portions (91, 92) being connected together by an annular connecting member (93) configured in such a way as to maintain a seal between the first and second portions (91, 92) in case of misalignment.

6. System (26) according to the preceding claim, **characterised in that** a ball-joint connection (95) is interposed at each free end (91A, 92A) of the first and second portions (91, 92) and between the walls of said first and second portions (91, 92) and of the annular connection member (93).

7. System (26) according to one of the preceding claims, **characterised in that** the load-transfer module (51) comprises an inner ferrule (52) on which are mounted the spraying means (86), the inner ferrule (52) being provided with an orifice (88) with a radial axis coaxial to an opening (89) of an inner ring (36) of said bearing (34), the spraying means (86) extending at least partially through the orifice (88) and the opening (89).

8. System (26) according to one of the preceding claims, **characterised in that** the load-transfer bearing (34) is provided with a double-row bearing and the spraying means (86) comprise at least two nozzles (107) for each row, the nozzles (107) being distributed azimuthally around said longitudinal axis (X).

9. System (26) according to one of the preceding claims, **characterised in that** the supply conduit (75) comprises an arched tubular body (76) which is arranged at least partially around the movable body (29) and fixed on a rear face of the inner ferrule (52).

10. System (26) according to the preceding claim, **characterised in that** the supply conduit (75) comprises tubes (82) extending along an axis substantially parallel to the longitudinal axis (X), said tubes being connected by a first end (83) to the body (76) of the supply conduit (75) and by a second end (84) to the spraying means (86).
